# EUROPEAN PATENT APPLICATION

(11) **EP 4 644 284 A1**
(43) Date of publication of application: **05.11.2025**
(21) Application number: 24173940.8
(22) Date of filing: 02.05.2024
(51) Int. Cl.: B65D 35/10, B32B 1/08, B65D 65/40, B32B 27/08, B32B 27/32

(54) **FLEXIBLE TUBE CONTAINER**

(71) Applicant: ALBEA SERVICES, 92230 Gennevilliers (FR)
(72) Inventor: NEUBERGER, Arthur, 92230 Gennevilliers (FR); MAURICE, Thierry, 92230 Gennevilliers (FR); LEMOY, Sébastien, 92230 Gennevilliers (FR); MUTHA, Nitin, 92230 Gennevilliers (FR)
(74) Representative: Gevers & Orès

(57) **Abstract**

A flexible tube container (1) comprising a tube head (10) and a skirt (100), the skirt comprises an internal tube (30) comprising at least 70% of post-consumer resin or recycled material and an external multi-layer polymeric film (40) comprising at least one layer of virgin polyethylene (50, 60) and at least one barrier layer (70), wherein the total thickness of the skirt (100) is comprised between 290 and 450 µm.

## Description

The invention relates to a flexible tube container, also call squeezable tube container, formed from an internal tube and an external film. Said tube containers are designed to store and distribute liquid to pasty products.

These flexible tube containers include a head and a flexible skirt comprising several layers generally made of different material.

In the case of cosmetic packaging industry, multi-layer is widely used as they represent advantages in terms of product protection and mechanical properties, especially to produced tube containers with developed and efficient properties preventing light, gas, odors, flavors, water vapor, and water from permeating. With the increased awareness of environmental issues, it is very desirable to be able to recycle plastic materials, in particular those used in packaging. One such source of plastic materials is known as Post-Consumer Recycled (PCR). In general, three types of polymers are available as PCR, these being polyethylene terephthalate (PET), polypropylene (PP) and polyethylene (PE).

Unfortunately, this type of material or resin encounters specific issues, particularly due to the presence of particle contaminants.

Thus, the use of PCR resin or recycled material on the outer layer results in an external surface that is too rough and shows dots or "fisheye".

Even used in an internal layer, the particle contaminants can lead to imperfections on the external surfaces, particularly in the form of projections and/or protrusions leading to printing defects like missing ink or dots.

In both cases, these defects result from a bad visual aspect for the tube containers.

It has also been observed in tube containers comprising PCR resin or recycled material that the stress cracking resistance does not meet functional requirements. The use of special formulation is required to improve the stress cracking resistance complexifying the manufacture of the tube containers.

The present invention attempts to solve at least one of the above-mentioned problems and propose a flexible tube container comprising a tube head and a skirt, the skirt comprises an internal tube comprising at least 70% of post-consumer resin or recycled material and an external multi-layer polymeric film comprising at least one layer of virgin polyethylene and at least one barrier layer, wherein the total thickness of the skirt is comprised between 290 and 450 µm.

The internal tube makes it possible to obtain a skirt which is rich in recycled materials without being hampered by particle contaminants that result in a too rough external surface with dots or "fisheye" given that it is covered with an external multi-layer polymeric film comprising virgin polyethylene. The external multi-layer polymeric film helps hide defects of the internal tube and provides a smooth, defect-free surface ideal for decoration and aesthetics for the appearance of the final flexible tube container. The particles cannot be felt anymore and do not interfere in the surface printing process.

Furthermore, the internal tube does not have a longitudinal weld or joint or seam and thus provides sealing of the skirt at this level compared to conventional tubes. The risks of leaks at the longitudinal weld are thus avoided.

Finally, the external multi-layer polymeric film includes at least one barrier layer that prevents light, gas, odors, flavors, water vapor, and water from permeating.

The invention can also comprise any of the following features taken individually or in any technically possible combination:
- the internal tube is an extruded tube,
- the internal tube is exempt from a longitudinal weld or joint or seam,
- the internal tube is a seamless tube,
- the internal tube comprises between 70% and 100% of post-consumer resin or recycled material,
- the internal tube comprises between 80% and 100% of post-consumer resin or recycled material,
- the internal tube comprises between 90% and 100% of post-consumer resin or recycled material,
- the internal tube comprises between 95% and 100% of post-consumer resin or recycled material,
- the internal tube comprises 100% of post-consumer resin or recycled material,
- the post-consumer resin or recycled material is post-consumer or recycled HDPE,
- the internal tube is a mono or a multilayered tube,
- the total thickness of the internal tube is comprised between 250 and 350 µm,
- the total thickness of the internal tube is comprised between 250 and 300 µm,
- the total thickness of the internal tube is about 280µm,
- the virgin polyethylene is HDPE,
- the at least one barrier layer is made of EVOH,
- the thickness of the at least one barrier layer is comprised between 2 and 10 µm,
- the thickness of the at least one barrier layer is comprised between 4 and 6 µm,
- the total thickness of the external film is comprised between 40 and 100 µm,
- the total thickness of the external film is comprised between 60 and 70 µm,
- the external film is a laminated film,
- the external film is multilayer blown film,
- the external film is printed,
- the external film formed an external tube comprising a longitudinal weld or join,
- the total thickness of the skirt is comprised between 290 and 450 µm
- the total thickness of the skirt is comprised between 300 and 400 µm
- the total thickness of the skirt is about 350 µm,.

The invention will be better understood thanks to the following description which is only indicative and which is not intended to limit said invention, accompanied with the following figures:
Figure 1 is a schematic representation of a flexible tube container according to an embodiment of the present invention,
Figure 2 is a sectional view of part of figure 1,
Figure 3 is a schematic representation of a flexible tube container according to a second embodiment of the present invention,
Figure 4 is a schematic representation of a flexible tube container according to another embodiment of the present invention,
Figure 5 is a schematic representation of a flexible tube container according to another embodiment of the present invention,
Figure 6 is a schematic cross section diagram of a first example of a skirt of the flexible tube container of figure 1,
Figure 7 is a schematic cross section diagram of a second example of a skirt of the flexible tube container of figure 1.

In the context of the invention, the following definitions and abbreviations are used.

As used herein, the terms "outer", "inner", "upper" and "lower", and the like, used with respect to the various layers refer to the laminated material with the intended outer or upper surface uppermost and the intended inner or lower (product-contacting) surface lowermost. In addition, these terms and the terms "over", "under" or "on" do not imply that the layers are necessarily directly in contact. For example, the upper layer being "formed on" the barrier layer does not preclude the presence of one or more other intervening layers located between the upper layer and the barrier layer. Furthermore, layers may be provided under the inner layer, i.e., between the inner layer and the product, or above the outer layer (like decorative layers).

The term "container" is used herein to refer to an item which may contain a product. Such products are usually liquids, gels or pastes. Preferred containers include tubes and pouches. The container may further comprise a lid or a cap and, if necessary, attachment means for the lid or cap (such as a tube head or shoulder) before it forms a useful commercial container.

The term "flexible" as used herein describes a laminate or a container made thereof which can bend or be bent easily and which does not break (unless it is bent too much). Herein in connection with the containers the term flexible indicates that if the container is subjected to a force, for example, by being filled with a liquid, or by applying pressure with a finger or a hand, it will change its form without breaking. A flexible container can also be considered to be a "squeezable" container.

The term "tie layer" refers to a layer which is placed between two layers with the object of ensuring that the two layers are joined together.

The term "polymer" refers to a large molecule, or macromolecule, composed of many repeated subunits.

The term "polyolefin" refers to any of a class of polymers produced from a simple olefin as a monomer.

The term "PE" refers to polyethylene.

The term "HDPE" refers to high density polyethylene.

The term "LLDPE" refers to linear low density polyethylene.

The term "EVOH" refers to ethylene-vinyl alcohol.

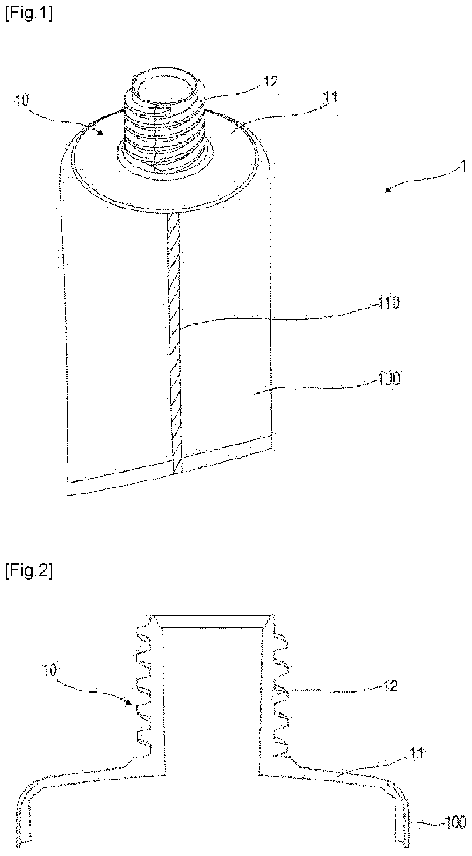

As illustrated in Fig. 1 to 5, the invention relates to a flexible tube container 1 comprising a tube head 10 and a skirt 100.

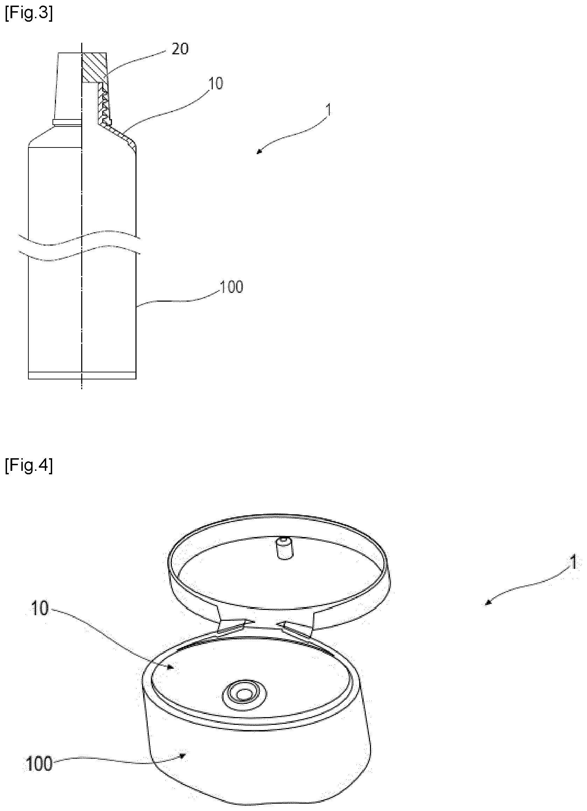

Advantageously, as represented at figure 3, the flexible tube container 1 can also comprise a cap 20.

The tube head 10 comprises a wall with a distribution opening and is attached or linked to the skirt 100. According to an embodiment illustrated in figures 1 to 3, the head 10 can comprise a shoulder 11 and a neck 12. The neck advantageously comprises thread. The cap can be screwed on the neck in order to block the distribution opening.

According to another embodiment not illustrated, the cap can be snapped on the neck, the neck comprising snap function such as an annular rib cooperating with flanges or tabs of the cap.

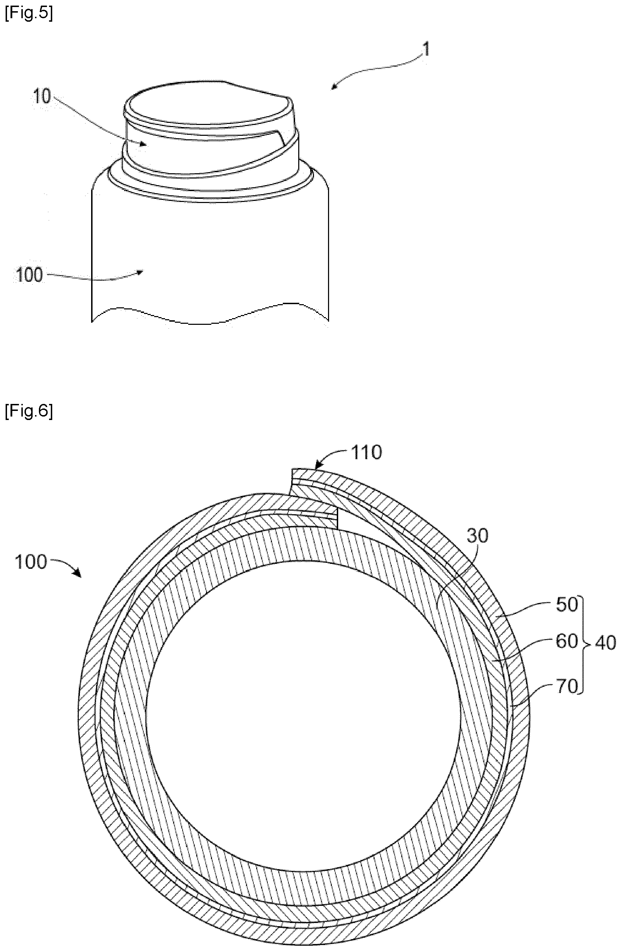

According to yet another embodiment represented at figure 4 and 5, the tube can comprise a head 10 with no neck. In this configuration, the head comprises only the wall with a distribution opening, this wall being attached directly to the skirt. This shoulder less configuration allows to reduce the quantity of material used to form the head.

According to an embodiment, the tube 1 can also comprise an insert located inside the container and attached to the internal surface of the tube head. In this case, the cap advantageously comprise a punch configured to pierce or cut the insert during the first use of the container. More advantageously, the container according to this embodiment comprises a ring mounted on the head. Said ring allows to maintain the cap in a first position, called waiting position, in which the pinch is kept at distance from the insert.

As represented in figures 2 and 3, said flexible tube skirt 100 is intended to be fixed to the tube head 10 in order to form the flexible tube container 1. The tube head 10 is advantageously overmoulded on the skirt 100. The skirt 100 is advantageously fixed to the shoulder periphery. Said tube head 10 is advantageously made of PE but can be made in any other suitable material such as PP (polypropylene). The tube head can be produced as a separate piece of plastic and then attached to the skirt by heating the edge of the shoulder and the edge of the skirt and compress them together.

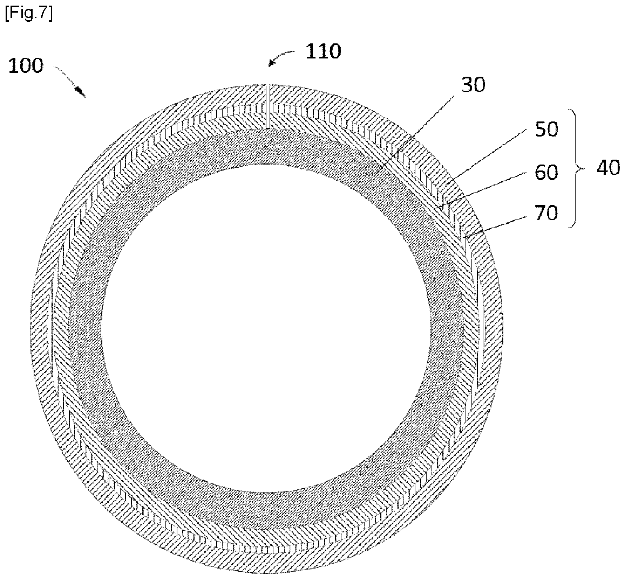

Two examples of a skirt 100 according to the invention are illustrated at figures 6 and 7. It has to be noticed that the figures 6 and 7 are schematic representation and that the layers are not at scale.

The skirt 100 comprises an internal tube 30 and an external multi-layer polymeric film 40. In others words, the skirt 100 is formed from an internal tube 30 obtained directly in the shape of a tube and from a flat external film 40 wound in a tube shape around the internal tube 30.

According to the invention, the internal tube 30 comprises at least 70% of post-consumer resin or recycled material and the external multi-layer polymeric film 40 comprises at least one virgin polyethylene layer 50, 60 and at least one barrier layer 70.

We mean by post-consumer resin or post-consumer recycled material (PCR material), a material from reprocessed plastics generated by households or commercial, industrial and institutional facilities in their role of end user, in other word a material from a content that can no longer be used for the purpose for which it was designed, according to, for example, the definition of the ISO 14021:2016 standard.

Typically, those skilled in the art understand that it is not a material from preconsumer material, also called post-process recycled material or regrind scrap that is collected at the plastic molding factory during the process.

The internal tube 30 makes it possible to obtain a skirt which is rich in recycled materials without being hampered by particle contaminants that result in a too rough external surface with dots or "fisheye" given that it is covered with an external multi-layer polymeric film 40 comprising virgin polyethylene. The external multi-layer polymeric film 40 helps hide defects of the internal tube 30 and provides a smooth, defect-free surface ideal for decoration and aesthetics for the appearance of the final flexible tube container. The particles cannot be felt anymore and do not interfere in the surface printing process as the external film 40 is, preferably, printed before being welded to internal tube 30.

Furthermore, the internal tube 30 does not have a longitudinal weld or joint or seam and thus provides sealing of the skirt at this level compared to conventional tubes. The risks of leaks at the longitudinal weld are thus avoided.

Finally, the external multi-layer polymeric film 40 includes at least one barrier layer 70 that prevents light, gas, odors, flavors, water vapor, and water from permeating.

Advantageously, the internal tube 30 is an extruded tube.

The internal tube 30 may be a mono or a multilayered tube.

Preferably, the internal tube 30 is obtained directly in the shape of a tube, for example by extrusion of one or a plurality of layers. Each layer of the internal tube 30 is formed by an extruder charged with the corresponding material. Layers with same composition can be formed from the same extruder or from different extruders.

The internal tube 30 is thus exempt from a longitudinal weld or joint or seam. The internal tube 30 is also call a seamless tube.

The risks of leaks at the longitudinal weld are thus reduced.

Preferably, the post-consumer resin or recycled material is post-consumer or recycled HDPE.

Advantageously, the total thickness of the internal tube 30 is comprised between 250 and 350 µm, preferably the total thickness of the internal tube 30 is comprised between 250 and 300 µm, preferably the total thickness of the internal tube 30 is about 280 µm.

Advantageously, the external multi-layer polymeric film 40 is obtained from a flat multi-layer sheet structure that is wound in length direction.

The winding of the external multi-layer polymeric film 40 is done such that the flat sheet is given a cylindrical shape. The side edges of the flat sheet are overlapped (as illustrated in figure 6) or put edge-to-edge (as illustrated in figure 7) then welded while forming a longitudinal weld or join or seam 110.

In others words, the external film 40 formed an external tube comprising a longitudinal weld or join 110.

In the examples illustrated at figures 6 and 7, the external multi-layer polymeric film 40 comprises an inner virgin polyethylene layer 60, an outer virgin polyethylene layer 50 and a barrier layer 70 located between the inner virgin polyethylene layer 60 and the outer virgin polyethylene layer 50.

Preferably, the virgin polyethylene is HDPE.

Preferably, the at least one barrier layer 70 is made of EVOH. The EVOH can be an EVOH with an ethylene content less than 32 mol%.

The EVOH has efficient properties preventing light, gas, odors, flavors, water vapor, and water from permeating.

HDPE helps to improve barrier properties of the EVOH, especially HDPE improves moisture barrier.

Advantageously, the thickness of the inner virgin polyethylene layer 60 is comprised between 15 and 30 µm, preferably between 20 and 25 µm. Advantageously, the thickness of the outer virgin polyethylene layer 50 is comprised between 15 and 30 µm, preferably between 20 and 25 µm. Advantageously, the thickness of the at least one barrier layer 70 is comprised between 2 and 10 µm. Preferably, the thickness of the at least one barrier layer 70 is comprised between 4 and 6 µm.

The external film 40 may be a laminated film or a multilayer blown film.

Advantageously, the external film 40 comprises a tie layer (not shown) between the barrier layer 70 and the inner layer 60 and/or between the barrier layer 70 and the outer layer 50. Said tie layer is used to connect the inner layer 60 and barrier layer 70 as well as the outer layer 50 and the barrier layer 70 and to prevent any delamination problems.

Advantageously, the tie layers are an anhydride modified ethylene acrylate resin, such as maleic anhydride grafted LLDPE.

Advantageously, the thickness of each of the tie layer is between 5 µm and 15 µm, preferably between 4 µm and 8 µm.

Advantageously, the external film 40 is printed and/or decorated.

The surface printing and/or decoration process may be flexo printing, off-set printing, digital printing, screen printing, cold foil stamping or other printing and/or decoration methods known of the one skilled in the art.

Advantageously, the printing and/or decoration process is done directly on the external film 40 before to be assembled at the internal tube 30.

To improve the appearance of the skirt, the internal tube 30 and/or the external film 40 may be, transparent, white, colored, silver to give a shiny and/or metallic appearance.

Advantageously, the total thickness of the external film 40 is comprised between 40 and 100 µm. Preferably, the total thickness of the external film 40 is comprised between 60 and 70 µm.

Advantageously, the external film 40 is thin compared to the thickness of the internal tube 30 in order to keep a good ratio of PCR in the flexible tube container.

According to the invention, the total thickness of the skirt 100 is comprised between 290 and 450 µm.

Preferably, the total thickness of the skirt is comprised between 300 and 400 µm, preferably the total thickness of the skirt is about 350 µm. Such thickness is well adapted for form ing flexible tube, in particular flexible tube containers for cosmetic product.

The following structures are examples of the skirt 100 of flexible tubes according to the present invention. The invention is not restricted to the specific skirt 100 of the example but encompasses other skirt falling within the scope of the appended claims.

The different layers of these examples of skirt 100 are described starting from the external layer, i.e., the intended outer surface uppermost, to the internal layer, i.e., the intended inner (product-contacting) surface lowermost.

In the examples 1 to 5, the external film has a PE/EVOH/PE structure.

In the example 1, the internal tube 30 is made of 70% recycled HDPE and 30% of LLDPE.

In the examples 2 to 5, the internal tube 30 is made of 100% recycled HDPE except if colorant is added, for example as a white masterbatch. The external film has a PE/EVOH/PE structure.

### Example 1:

This embodiment is schematically represented at figures 6 and 7. Said embodiment is constituted of:
- a white external film 40 having a thickness of 70 µm and representing 20% in weight of the skirt 100,
- a white internal tube 30 having a thickness of 280 µm and representing 80% in weight of the skirt 100.

The internal tube 30 is obtained by extrusion.

The skirt has a total thickness of 350 µm.

### Example 2:

This embodiment is schematically represented at figures 6 and 7. Said embodiment is constituted of:
- a white external film 40 having a thickness of 70 µm and representing 20% in weight of the skirt 100,
- a white internal tube 30 having a thickness of 280 µm and representing 80% in weight of the skirt 100.

The internal tube 30 is obtained by extrusion.

The skirt has a total thickness of 350 µm.

### Example 3:

This embodiment is schematically represented at figures 6 and 7. Said embodiment is constituted of:
- a transparent external film 40 having a thickness of 50 µm and representing 14% in weight of the skirt 100,
- a transparent internal tube 30 having a thickness of 300 µm and representing 84% in weight of the skirt 100.

The internal tube 30 is obtained by extrusion.

The skirt has a total thickness of 350 µm.

### Example 4:

This embodiment is schematically represented at figures 6 and 7. Said embodiment is constituted of:
- a silver (metallized PE/EVOH/PE) external film 40 having a thickness of 60 µm and representing 17% in weight of the skirt 100,
- a transparent internal tube 30 having a thickness of 290 µm and representing 81 % in weight of the skirt 100.

The internal tube 30 is obtained by extrusion.

The skirt has a total thickness of 350 µm.

### Example 5:

This embodiment is schematically represented at figures 6 and 7. Said embodiment is constituted of:
- a white external film 40 having a thickness of 90 µm and representing 26% in weight of the skirt 100,
- a transparent internal tube 30 having a thickness of 260 µm and representing 73% in weight of the skirt 100.

The internal tube 30 is obtained by extrusion.

The skirt has a total thickness of 350 µm.

The stress-cracking has been measured for tube containers with skirt 100 according to the above examples.

The stress-cracking was evaluated on ten tubes with Igepal Co-630 at 10% in water in an oven at 50 °C. The tubes were stored in vertical position on the end-seal and a pressure was applied manually every day for one month for the stress cracking test on sleeve. The tubes were stored in vertical position on the cap and a pressure was applied manually on the sleeve near the head manually after 3, 5, 7, 10 and 14 days and then once a week for 3 months if there is no cracking after one month for the stress cracking test on sleeve. No defect was encountered directing the tests, both in example 1 comprising 70% of recycled HDPE and in examples 2 to 5 comprising 100% of recycled HDPE.

This clearly shows that the use of post-consumer resin or recycled material does not result in a loss of properties of the skirt which remains efficient.

## Claims

1. A flexible tube container (1) comprising a tube head (10) and a skirt (100), the skirt comprises an internal tube (30) comprising at least 70% of post-consumer resin or recycled material and an external multi-layer polymeric film (40) comprising at least one layer of virgin polyethylene (50, 60) and at least one barrier layer (70), wherein the total thickness of the skirt (100) is comprised between 290 and 450 µm.

2. A flexible tube container (1) according to claim 1, wherein the internal tube (30) is an extruded tube.

3. A flexible tube container (1) according to the preceding claim, wherein the post-consumer resin or recycled material is post-consumer or recycled HDPE.

4. A flexible tube container (1) according to the preceding claim, wherein the internal tube (30) is a mono or a multilayered tube.

5. A flexible tube container (1) according to any of the preceding claims, wherein the total thickness of the internal tube (30) is comprised between 250 and 350 µm.

6. A flexible tube container (1) according to any of the preceding claims, wherein the virgin polyethylene of the at least one layer of virgin polyethylene (50, 60) is HDPE.

7. A flexible tube container (1) according to any of the preceding claims, wherein the at least one barrier layer (70) is made of EVOH.

8. A flexible tube container (1) according to any of the preceding claims, wherein the total thickness of the external film (40) is comprised between 40 and 100 µm.

9. A flexible tube container (1) according to any of the preceding claims, wherein the external film (40) is a laminated film.

10. A flexible tube container (1) according to any of the preceding claims, wherein the external film (40) is printed.

11. A flexible tube container (1) according to any of the preceding claims, wherein the external film (40) formed an external tube comprising a longitudinal weld or join (110).
